# EUROPÄISCHE PATENTSCHRIFT

(11) **EP 2 616 257 B1**
(45) Veröffentlichungstag und Bekanntmachung des Hinweises auf die Patenterteilung: **23.07.2014**
(21) Anmeldenummer: 11740907.8
(22) Anmeldetag: 01.08.2011
(51) Int. Cl.: B60G 3/20, B60G 3/22, B60G 11/15, B60K 7/00, B60K 17/04, B60G 3/18

(54) **EINZELRADAUFHÄNGUNG EINES NICHT LENKBAREN ANGETRIEBENEN RADES EINES ZWEISPURIGEN FAHRZEUGS**
INDEPENDENT SUPSENSION FOR A NON-STEERABLE, DRIVEN WHEEL OF A TWO-TRACK VEHICLE
SUPSENSION INDÉPENDANT D'UN ROUE MOTRICE, NON-DIRECTRICE POUR UN VÉHICULE

(30) Priorität: 14.09.2010 DE 102010040763
(43) Veröffentlichungstag der Anmeldung: 24.07.2013
(73) Patentinhaber: Bayerische Motoren Werke Aktiengesellschaft, 80809 München (DE)
(72) Erfinder: PRUCKNER, Alfred, 81545 Muenchen (DE); MÜLLER, Jakob, 80689 München (DE); SCHLICHTE, Dirk, 80469 Muenchen (DE); DAVY, Elsa, 80637 München (DE); PAULUS, Bernhard, 81541 München (DE)
(86) Internationale Anmeldenummer: PCT/EP2011/063192
(87) Internationale Veröffentlichungsnummer: WO 2012/034769

(56) Entgegenhaltungen:
- WO-A1-2011/072967
- DE-A1-102009 038 424
- FR-A- 846 448
- US-A- 2 208 710
- US-A1- 2006 283 653

## Beschreibung

Die Erfindung betrifft eine Einzelradaufhängung eines nicht lenkbaren angetriebenen Rades eines zweispurigen Fahrzeugs mit zwei sich unter kinematischer Betrachtungsweise in einer vertikalen Projektion im wesentlichen in Fahrzeug-Längsrichtung erstreckenden und aufgrund ihrer Lagerung jeweils in einer im wesentlichen vertikalen Ebene verschwenkbaren Lenkern, wobei am ersten Lenker direkt oder indirekt ein das Rad tragendes Radlager befestigt ist und dieser erste Lenker mit seinem Endabschnitt über eine sich in Konstruktionslage zumindest annähernd in Vertikalrichtung erstreckende Pendelstütze oder einen Dreieckslenker mit verbreiterter Basis am Fahrzeug-Aufbau abgestützt ist, und wobei der andere zweite Lenker einerseits mit nur einem kinematischen Dreh-Freiheitsgrad gelenkig direkt oder indirekt am Fahrzeug-Aufbau abgestützt und andererseits mit nur einem kinematischen Dreh-Freiheitsgrad gelenkig mit dem ersten Lenker zwischen dem Radlager und dem Befestigungspunkt der Pendelstützte über ein eine Drehachse darstellendes Verbindungsglied verbunden ist, und wobei der erste Lenker zumindest mit seinem sich vom Radlager zum Verbindungsglied mit dem zweiten Lenker erstreckenden Abschnitt innerhalb des von einer Felge des Rades eingeschlossenen oder beschriebenen Raumes liegt, und wobei das Rad über eine Antriebswelle und ein sich an dieses anschließendes zumindest teilweise innerhalb des von der Felge des Rades eingeschlossenen oder beschriebenen Raumes angeordnetes Getriebe, welches mindestens zwei in Axialrichtung des Rads zueinander versetzt angeordnete und durch Getrieberäder gebildete Übersetzungsstufen aufweist, antreibbar ist.

Eine solche Einzelradaufhängung stellt sich als Kombination des jeweiligen Gegenstands der nicht vorveröffentlichten internationalen Patentanmeldung mit dem Aktenzeichen PCT/EP2010/067478 und der ebenfalls nicht vorveröffentlichten deutschen Patentanmeldung mit dem amtlichen Aktenzeichen DE102009038424.3 dar. Insbesondere jedoch sei ergänzend klargestellt, wie der vorliegend verwendete Begriff, dass sich die Lenker unter kinematischer Betrachtungsweise im wesentlichen in Fahrzeug-Längsrichtung erstrecken und in einer im wesentlichen vertikalen Ebene verschwenkbar sind, zu verstehen ist. Ein Lenker einer erfindungsgemäßen Einzelradaufhängung muss nämlich nicht zwangsweise die Gestalt üblicher radführender Lenker von Radaufhängungen aufweisen, kann aber dennoch kinematisch betrachtet als Lenker wirken und definierte Bewegungsmöglichkeiten entsprechend den vorliegend beispielsweise im Oberbegriff des Anspruchs 1 definierten Freiheitsgraden besitzen. Für einen solchen Lenker kann jedenfalls in einem Kinematik-Modell eine "Ersatzgerade" definiert werden, welche dann die beschriebene Eigenschaft besitzt, nämlich sich im wesentlichen in Fahrzeug-Längsrichtung erstreckt und in einer im wesentlichen vertikalen Ebene verschwenkbar ist. Dabei ist der Begriff "im wesentlichen" gleichzusetzen mit der Tatsache, dass die Lenker bzw. deren "Ersaizgeraden" in einem Kinematik-Modell um nicht mehr als einen Winkel in der Größenordnung von 6° bis 10° gegenüber der Fahrzeug-Längsrichtung geneigt verlaufen und aufgrund ihrer Lagerung in einer Ebene, die um nicht mehr als einen Winkel in der Größenordnung von 6° bis 10° gegenüber der Vertikalen geneigt ist, verschwenkbar sind. Weiterhin sei noch angegeben, dass der Begriff "in Konstruktionslage" wie dem Fachmann bekannt die Position des Rades gegenüber dem Fahrzeug-Aufbau bei mit einer Standardmasse beladenem Fahrzeug bei Stillstand des Fahrzeugs darstellt.

Hiermit soll für eine solche Einzelradaufhängung eine besonders raumsparende Anordnung aufgezeigt werden (= Aufgabe der vorliegenden Erfindung).

Die Lösung dieser Aufgabe ist für eine Einzelradaufhängung nach dem Oberbegriff des Anspruchs 1 dadurch gekennzeichnet, dass die Rotationsachse einer das zweite Getrieberad der (von der Antriebswelle aus betrachtet) ersten Übersetzungsstufe mit dem ersten Getrieberad der zweiten Übersetzungsstufe verbindenden Verbindungs-Welle mit der durch das Verbindungsglied der beiden Lenker dargestellten Drehachse zusammenfällt. Vorteilhafte Aus- und Weiterbildungen sind Inhalt der Unteransprüche.

Mit den angegebenen kennzeichnenden Merkmalen wird äußerst wenig Bauraum benötigt, da die genannte Verbindungswelle und das genannte Verbindungsglied aufgrund des Zusammenfallens der Rotationsachse der Verbindungswelle mil der Drehachse des Verbindungsglieds konzentrisch zu einander angeordnet werden können, d.h. es kann beispielsweise die Verbindungswelle als Hohlwelle ausgeführt sein, in deren Innenraum das Verbindungsglied verläuft. Selbstverständlich ist auch die umgekehrte Anordnung möglich und es kann im Sinne einer vorteilhaften Weiterbildung bspw. das Verbindungsglied selbst die Verbindungswellle bilden, indem die beiden Lenker der Einzelradaufhängung über geeignete Lager um die Rotationsachse bzw. genannte Drehachse drehbar und dabei in Achsrichtung fixiert auf dem Verbindungsglied bzw. auf der Verbindungswelle gelagert sind.

In Anwendung des gleichen Prinzips kann auch die Rotationsachse der genannten Antriebswelle mit der Drehachse des zweiten Lenkers, in welcher dieser mit nur einem kinematischen Dreh-Freiheitsgrad gelenkig am Fahrzeug-Aufbau abgestützt ist, zusammenfallen, was zum ersten eine weitere Einsparung von benötigtem Bauraum zur Folge hat. Insbesondere jedoch ist es damit möglich, als Antriebswelle ohne Zwischenschaltung eines kardanischen Elements im wesentlichen unmittelbar die Abtriebswelle eines Motors, insbesondere Elektromotors, zu verwenden, wobei dieser Motor in günstiger Weise am Aufbau des Fahrzeugs befestigt sein kann und somit nicht zur sog. ungefederten Masse gehört. Auch für das Zusammenfallen der Rotationsachse der genannten Antriebswelle mit der Drehachse des zweiten Lenkers gegenüber dem Fahrzeug-Aufbau kann wie grundsätzlich bei Zusammenfallen der Drehachse eines der beiden Lenker mit einer Rotationsachse des Getriebes bzw. einer Rotationsachse einer Übersetzungsstufe des besagten Getriebes der entsprechende Lenker auf einer diese Rotationsachse aurfweisenden Welle drehbar gelagert sein, zumindest jedoch kann beispielsweise die genannte Welle konzentrisch zu und innerhalb einer hohlen Struktur oder einem hohlen Bauteil verlaufen, auf welcher bzw. welchem seinerseits der Lenker entsprechend gelagert ist.

Im Oberbegriff des vorliegenden Anspruchs 1 ist angegeben, dass der erste das Radlager tragende Lenker zumindest mit seinem sich vom Radlager zum Verbindungsglied mit dem zweiten Lenker erstreckenden Abschnitt innerhalb des von einer Felge des Rades eingeschlossenen oder beschriebenen Raumes liegt. Auch ist im Oberbegriff des vorliegenden Anspruchs 1 (abweichend von der genannten deutschen Patentanmeldung DE102009038424.3) angegeben, dass das Getriebe (nur) zumindest teilweise innerhalb des Rades angeordnet ist, wobei der Ausdruck "innerhalb des Rades" gleichzusetzen ist mit dem von der Felge des Rades eingeschlossenen oder beschriebenen bzw. begrenzten Raum, d.h. dem sog. Hohlraum des Rades. Dieser Hohlraum des Rades oder der Felge ist in einer Projektion senkrecht zur Drehachse des Rades durch die der Drehachse zugewandte Innenwand des sich im wesentlichen parallel zur Rad-Drehachse erstreckenden Felgenbetts sowie durch die üblicherweise im Bereich der dem Fahrzeug-Aufbau abgewandten Außenseite des Rades liegende sog. Radscheibe und die andere dem Fahrzeug-Aufbau zugewandte, ebenso wie die Radscheibe auf der Rad-Drehachse senkrecht stehende Rand-Ebene der Felge begrenzt. Sowohl in einer Projektion senkrecht zur Rad-Drehachse als auch in einer seitlichen Projektion in Richtung der Rad-Drehachse liegt somit der erste Lenker zumindest mit seinem genannten sich vom Radlager bis zum Verbindungsglied mit dem zweiten Lenker erstreckenden Abschnitt innerhalb des besagten Hohlraumes; und dies gilt auch zumindest für einen Teil des Getriebes. Hiermit ergibt sich eine raumsparende Anordnung, wobei der erste Lenker mit demjenigen Abschnitt, an dem die genannte Pendelstütze oder der genannte Dreieckslenker mit verbreiterter Basis angelenkt ist, aus diesem von der Felge eingeschlossenen oder beschriebenen Raum herausragen kann, da auch diese Pendelstütze oder der besagte Dreieckslenker zumindest teilweise außerhalb des von der Felge eingeschlossenen oder beschriebenen Raumes liegt, um ihrerseits bzw. seinerseits am Fahrzeug-Aufbau abgestützt werden zu können. Wenn wie soeben ausgeführt der erste Lenker mit seinem an die Pendelstützte oder dergleichen angelenkten Abschnitt aus dem von der Felge des Rades eingeschlossenen oder beschriebenen Raum herausragt, kann sich dieser Lenker im übrigen als reales Bauteil selbstverständlich nicht vollständig im wesentlichen in Fahrzeug-Längsrichtung erstrecken, weshalb im Oberbegriff des Anspruchs 1 die entsprechende Orientierung dieses Lenkers nur unter kinematischer Betrachtungsweise angegeben ist. Im übrigen ist in einer möglichen und in der genannten internationalen Patentanmeldung PCT/EP2010/067478 gezeigten realen Darstellung einer erfindungsgemäßen Einzelradaufhängung dieser erste Lenker ähnlich wie ein Radträger gestaltet; unter kinematischer Betrachtungsweise hingegen erstreckt sich dieser erste Lenker jedenfalls mit seinem sich vom Radlager zum Verbindungsglied mit dem zweiten Lenker erstreckenden Abschnitt tatsächlich im wesentlichen in Fahrzeug-Längsrichtung.

Es kann der Bauraumbedarf einer erfindungsgemäßen Einzelradaufhängung noch weiter reduziert werden, wenn neben dem abschnittsweise innerhalb der Felge liegenden ersten Lenker auch der zweite Lenker zumindest in Konstruktionslage und zumindest in einer Projektion in Richtung der Drehachse des Rades und/oder das Getriebe mit seinen beiden Übersetzungsstufen im wesentlichen innerhalb des von der Felge des Rades eingeschlossenen oder beschriebenen bzw. begrenzten Raumes liegen. Auf der dem Fahrzeug-Aufbau zugewandten Seite des Rades benötigt eine solche Einzelradaufhängung mit Ausnahme der genannten Pendelstütze oder des genannten Dreieckslenkers mit breiter sich im wesentlichen in Fahrzeug-Querrichtung erstreckender Abstützbasis sowie des zugehörigen Abschnitts des ersten Lenkers und der Abstützung der Pendelstütze oder des besagten Dreieckslenkers am Fahrzeug-Aufbau sowie weiterhin mit Ausnahme der zum Getriebe führenden Antriebswelle keinen weiteren Bauraum, so dass auf der dem Fzg.-Aufbau zugewandten Innenseite des Rades sehr viel Bauraum für die Karosserie bzw. den Aufbau des Fahrzeugs zur Verfügung steht.

In der genannten internationalen Anmeldung PCT/EP2010/067478 ist angegeben, dass die Drehachse der gelenkigen Verbindung zwischen dem ersten Lenker und dem zweiten Lenker in Konstruktionslage geringfügig gegenüber der Horizontalen (in Fahrzeug-Längsrichtung betrachtet) und/oder gegenüber der Fahrzeug-Querrichtung (in einer vertikalen Projektion betrachtet) geneigt sein kann. Gleiches gilt für eine Einzelradaufhängung nach der vorliegenden Erfindung, da auch hier mit dieser besagten Maßnahme eine gewünschte Änderung von Sturzwinkel und/oder Spurwinkel des Rades in Verbindung mit einer (vertikalen) Einfederbewegung oder Ausfederbewegung desselben erreicht werden kann. Zumindest bei einer nennenswerten Neigung der genannten Drehachse bzw. des entsprechenden Verbindungsgliedes sollte das genannte Getriebe, dessen genannte Verbindungswelle mit dieser Drehachse zusammenfällt, entsprechend angepasst sein und folglich in diesem Bereich Kegelräder, d.h. Räder mit kegelförmiger Eingriffsfläche aufweisen. Im Falle einer bevorzugten Ausbildung der Getrieberäder als Zahnräder ist somit zumindest das erste Getrieberad der zweiten Übersetzungsstufe, gegebenenfalls auch das auf der gleichen Verbindungswelle angeordnete zweite Getrieberad der ersten Übersetzungsstufe als Kegelzahnrad ausgeführt. Selbstverständlich können daneben auch die weiteren Getrieberäder des besagten Getriebes als Kegelräder ausgebildet sein. Im übrigen kann bevorzugt das zweite Getrieberad der zweiten Übersetzungsstufe als Hohlrad mit Innenverzahnung ausgeführt sein, da sich damit in bauraumoptimierter Ausführung ein hohes Übersetzungsverhältnis in dieser zweiten Übersetzungsstufe realisieren lässt.

Nach einer vorteilhaften Weiterbildung der vorliegenden Erfindung ist zumindest einer der Lenker zumindest abschnittsweise nach Art eines Gehäuses ausgebildet, innerhalb dessen die zwei Getrieberäder einer Übersetzungsstufe angeordnet sind. Für den Lenker ergibt sich mit einer solchen quasi kastenartigen Bauart eine hohe Festigkeit und es wird der benötigte Bauraum minimiert, indem Getrieberäder im Hohlraum eines solchen bspw. kastenartigen Lenkers angeordnet sind, die durch das genannte Gehäuse vor Verschmutzung und gegen Schmiermittelverlust in die Umgebung geschützt sind.

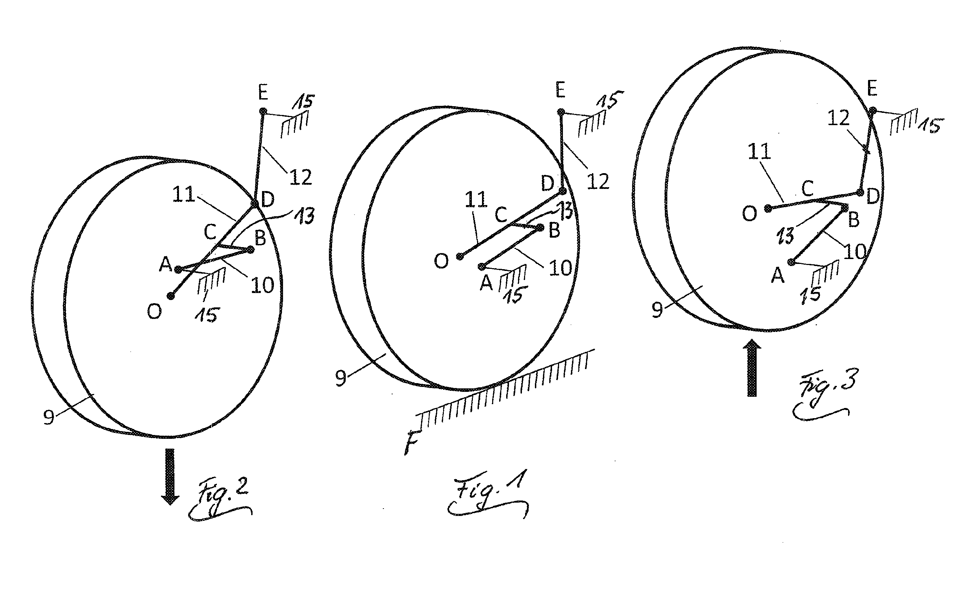

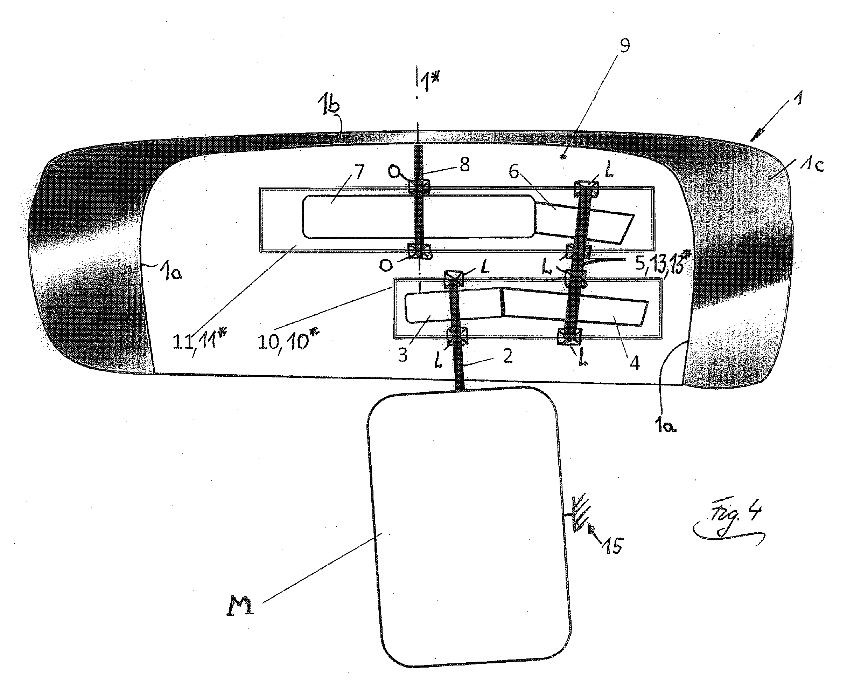

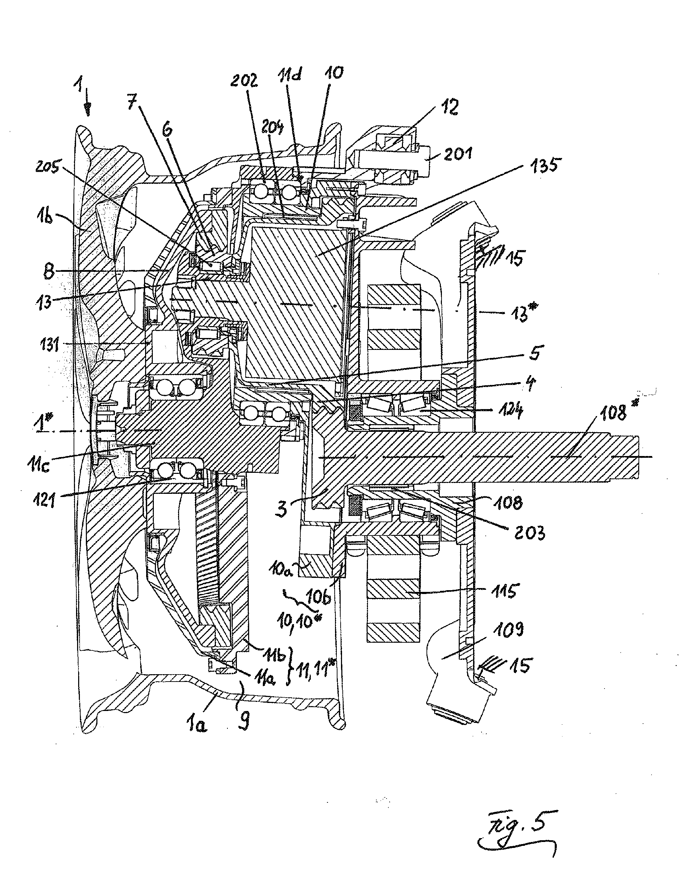

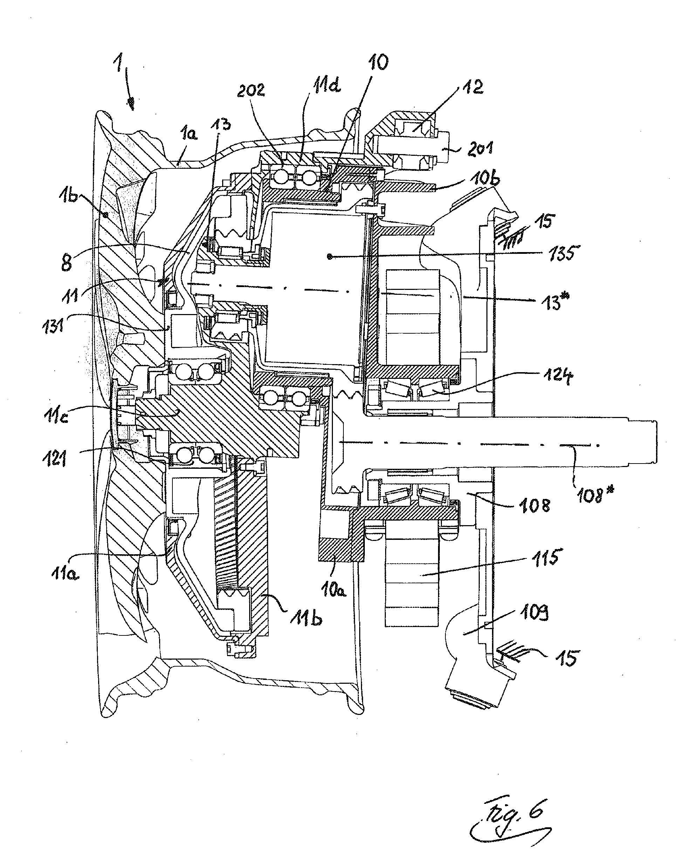

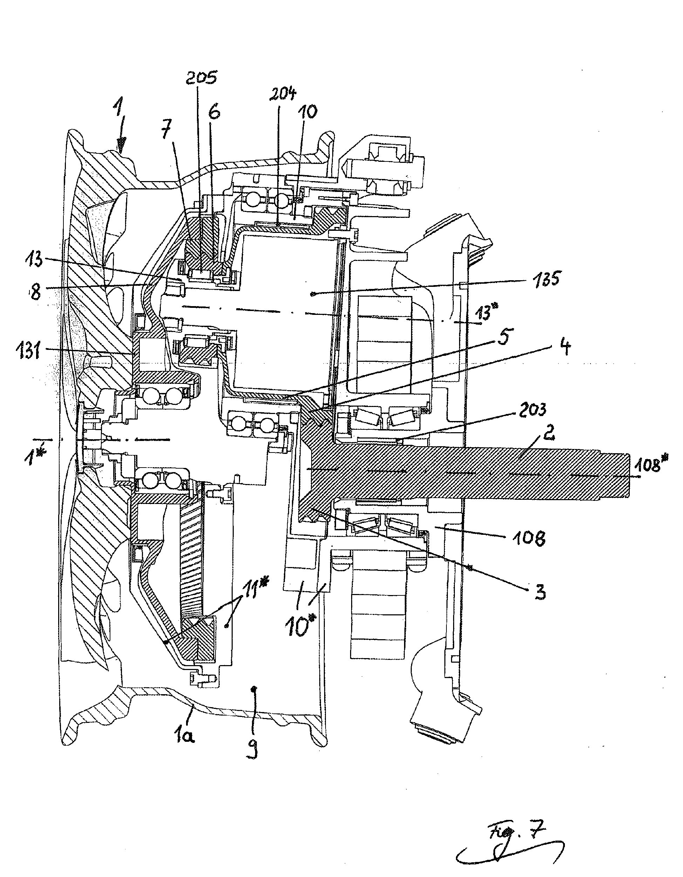

Im folgenden wird die Erfindung anhand eines Ausführungsbeispiels weiter erläutert, wobei in den beigefügten lediglich Prinzipskizzen darstellenden **Figuren 1** - **3** nur der von einer Felge des Rades eingeschlossene oder beschriebene Raum sowie die beiden Lenker mit ihrem Verbindungsglied und der genannten Pendelstütze perspektivisch in unterschiedlichen Einfederungs-Zuständen des Rades gegenüber dem Fzg.-Aufbau dargestellt sind, während **Figur 4** stark abstrahiert und auf das wesentlichste beschränkt eine vergleichbare Radaufhängung mit Rad und mit den beiden Lenkern ohne Pendelstütze, jedoch mit einem erfindungsgemäßen Getriebe mit Antriebswelle und Abtriebswelle in einer vertikalen Projektion (senkrecht zur Abtriebswelle in Richtung der Fahrbahn) zeigt. Schließlich ist in den **Figuren 5 - 7** ein im Detail auskonstruiertes Ausführungsbeispiel in einem die Rad-Drehachse enthaltenden Horizontalschnitt gezeigt, wobei in **Figur 5** sämtliche geschnittenen Bauelemente schraffiert dargestellt sind, während der besseren Erkennbarkeit halber in **Figur 6** nur das Rad und die beiden radführenden Lenker mit deren Verbindungsglied schraffiert sind und in **Figur 7** nur das Rad mit den Elementen des genannten Getriebes schraffiert dargestellt sind. Zur detaillierten Gestaltung der Lenker wird ergänzend auf das in der bereits mehrfach genannten internationalen Anmeldung PCT/EP2010/067478 detailliert beschriebene Ausführungsbeispiel verweisen, das viele Gemeinsamkeiten mit dem vorliegenden Ausführungsbeispiel aufweist. Dabei sind die Bezugsziffern solcher Bauelemente, die in den vorliegenden Prinzip-Darstellungen der Figuren 1 - 4 nicht gezeigt sind und im wesentlichen gleich oder ähnlich aus den Figuren 4 - 7 der internationalen Anmeldung PCT/EP2010/067478 übernommen sind, vorliegend mit den um den Wert "100" erhöhten Bezugsziffern aus der PCT/EP2010/067478 gekennzeichnet.

Zunächst auf die **Figuren 1 - 3** Bezug nehmend zeigt Fig.1 die Lenker in Konstruktionslage des Rades gegenüber dem Fahrzeug-Aufbau, während in Fig.2 die Lenker im gegenüber dem Fzg.-Aufbau ausgefederten Zustand des Rades und in Fig.3 die Lenker im gegenüber dem Fzg.-Aufbau eingefederten Zustand des Rades dargestellt sind. Der jeweilige Zustand ist durch die Pfeile bzw. die wie üblich dargestellte Fahrbahn F unterhalb des vom Rad bzw. der Felge eingeschlossenen Raumes verdeutlicht.

Mit der Bezugsziffer 9 ist der vom linken hinteren (und nicht lenkbaren) Rad eines Personenkraftwagens, genauer von der Felge dieses Rades eingeschlossene oder beschriebene bzw. begrenzte Raum gekennzeichnet, der weiter oben näher definiert wurde und der auch aus der später erläuterten Figur 4 gut hervorgeht. Das in den Figuren 1 - 3 nicht dargestellte, den besagten Raum 9 oder Hohl-Raum 9 umhüllende Rad selbst ist in üblicher Weise über ein Radlager um den Punkt O drehbar gelagert, wobei im weiteren der Buchstabe "O" auch zur Kennzeichnung des besagten Radlagers verwendet wird.

Das Radlager O ist direkt oder indirekt an einem Endabschnitt eines ersten Lenkers 11 der Radaufhängung befestigt. Dieser erste Lenker 11 erstreckt sich unter kinematischer Betrachtungsweise mit einem ersten Abschnitt in einer vertikalen Projektion (senkrecht auf die Fahrbahn F) im wesentlichen in Fahrzeug-Längsrichtung, d.h. um nicht mehr als einen Winkel in der Größenordnung von 6° bis 10° gegenüber der Fahrzeug-Längsrichtung geneigt, und es ist dieser erste Lenker 11 auf noch näher erläuterte Weise derart geführt, dass dieser Lenker 11 in einer im wesentlichen vertikalen Ebene, die um nicht mehr als einen Winkel in der Größenordnung von 6° bis 10° gegenüber der Vertikalen geneigt ist, kinematisch verschwenkbar ist. Durch die soeben verwendeten Begriffe "kinematisch verschwenkbar" und "kinematischer Dreh-Freiheitsgrad" sollen die dem Fachmann bekannten elastokinematischen Effekte ausgeschlossen werden. Dies bedeutet, dass zwar bei Vorsehen entsprechender Gummilager unter entsprechender Krafteinwirkung auch geringfügige vom (jeweils) genannten Freiheitsgrad abweichende Bewegungen des (jeweiligen) Lenkers möglich sind, jedoch können diese nur geringfügigen anderweitigen Bewegungen ohne Einwirkung entsprechend großer Kräfte und ohne elastische Verformungen nur in einem dem Lenker zugeordneten Gummilager stattfinden.

Neben dem genannten ersten Lenker 11 umfasst die erfindungsgemäße Radaufhängung einen zweiten Lenker 10, der sich ebenfalls in einer vertikalen Projektion (senkrecht auf die Fahrbahn F) zumindest unter kinematischer Betrachtungsweise im wesentlichen in Fahrzeug-Längsrichtung (d.h. in Richtung der Fzg.-Längsachse) und dabei um maximal einen Winkel in der Größenordnung von 6° bis 10° gegenüber der Fahrzeug-Längsrichtung geneigt erstreckt. Dieser zweite Lenker 10 ist mit einem Endabschnitt bzw. im Bereich seines ersten Endabschnitts im Punkt A solchermaßen mit nur einem (als Zahlwort!) kinematischen Dreh-Freiheitsgrad um diesen Punkt A verschwenkbar gelenkig am nur schematisch dargestellten Fahrzeug-Aufbau 15 derart abgestützt oder angebunden, dass auch dieser zweite Lenker 10 nur in einer im wesentlichen vertikalen Ebene, die um nicht mehr als einen Winkel in der Größenordnung von 6° bis 10° gegenüber der Vertikalen geneigt ist, kinematisch verschwenkbar ist. Der Punkt A verdeutlicht also die Lage des entsprechenden Gelenks oder Lagers, über welches der zweite Lenker 10 wie beschrieben verschwenkbar gegenüber dem lediglich abstrakt dargestellten Fzg.-Aufbau 15 geführt ist.

Der zweite Lenker 10 ist mit seinem anderen Endabschnitt bzw. im Bereich des zweiten Endabschnitts mit dem ersten Lenker 11 über nur einen (als Zahiwort!) kinematischen Dreh-Freiheitsgrad gelenkig verbunden, wobei diese gelenkige Verbindung eine durch die Punkte B, C verlaufende Drehachse 13* bildet oder beschreibt, die durch ein Verbindungsglied 13 gebildet ist. Dieses Verbindungsglied 13 kann beispielsweise ein Verbindungsbolzen mit den Endpunkten B, C sein, wobei der erste Lenker 11 und der zweite Lenker 10 um diesen genannten Verbindungsbolzen 13, der sich aufgrund der beschrieben Orientierung und Bewegungsfreiheit dieser beiden Lenker 11, 10 im wesentlichen horizontal im wesentlichen in Fahrzeug-Querrichtung erstreckt, verschwenkbar sind, und zwar um die besagte Drehachse 13*. Der Punkt B verdeutlicht also die Lage eines entsprechenden Gelenks oder Lagers, über welches der zweite Lenker 10 um die genannte Drehachse 13* verschwenkbar ist, und der Punkt C verdeutlicht die Lage eines entsprechenden Gelenks oder Lagers, über welches der erste Lenker 11 um die besagte Drehachse 13* wie beschrieben verschwenkbar ist.

Die soeben genannte gelenkige Verbindung zwischen den beiden Lenkern 11, 10 befindet sich in den Darstellungen der Figuren 1 - 3 auf dem ersten Lenker 11 in Fzg.-Längsrichtung betrachtet hier annähernd in dessen Mitte, jedoch kann dies auch anderweitig sein, vgl. die später erläuterte Figur 4. Wesentlich hingegen ist, dass der erste Lenker 11 mit seinem dem Radlager O gegenüber liegenden Endabschnitt in Vertikalrichtung betrachtet indirekt am Fahrzeug-Aufbau 15 abgestützt ist, wofür hier eine sog. Pendelstütze 12 vorgesehen ist. Diese sich in Konstruktionslage zumindest annähernd in Vertikalrichtung erstreckende Pendelstütze 12 ist am ersten Lenker 11 im Punkt D und am Fahrzeug-Aufbau 15 im Punkt E vorzugsweise jeweils über ein nur einen (als Zahlwort) Freiheitsgrad bindendes Gelenk abgestützt, welches beispielsweise in Form eines Kugelgelenkes oder eines entsprechenden bzw. für eine solche Abstützung im wesentlichen in Vertikalrichtung geeigneten Gummigelenkes ausgeführt sein kann. Die Punkte D, E verdeutlichen dabei jeweils die Lage eines solchen Gelenks. Theoretisch könnte dabei der Fahrzeug-Aufbau 15 mit einem entsprechenden Vorsprung in den von der Felge des Rades eingeschlossenen Raum 9 hineinragen, jedoch ist eine solche Gestaltung in der Realität weniger gut geeignet. Günstiger ist es, wenn die Pendelstütze 12 außerhalb des besagten von der Felge eingeschlossenen Raumes 9 liegt, was es jedoch erforderlich macht, dass der erste Lenker 11 mit seinem Abschnitt, an welchem die Pendelstützte 12 angelenkt ist, aus diesem Raum 9 herausgeführt ist. Dies ist konstruktiv einfach möglich, jedoch in den Prinzipskizzen **Fig. 1 - 4** der Einfachheit halber nicht figürlich dargestellt. (Jedoch zeigt das später erläuterte detaillierte Ausführungsbeispiel der Figuren 5 - 7 dieses letztgenannte Merkmal).

Die grundsätzliche Funktion dieser soweit beschriebenen und in den **Figuren 1 - 4** gezeigten Einzelradaufhängung besteht darin, dass das Rad alleine durch die beiden Lenker 11, 10 im Zusammenwirken mit der Pendelstütze 12 nur mit einem einzigen verbleibenden Freiheitsgrad geführt ist, der eine Einfeder-Bewegung des Rades gegenüber dem Fahrzeug-Aufbau 15 gemäß Figur 3 bzw. eine Ausfederbewegung des Rades gegenüber dem Fzg.-Aufbau 15 gemäß Figur 2 erlaubt. Dabei ermöglicht die beschriebene und quasi scherenartige Anordnung der beiden Lenker 11, 10 eine relativ große Vertikalbewegung des Punktes O, d.h. des Radmittelpunktes oder Radlagers O, bei einer gleichzeitigen minimalen bzw. nur geringen Vertikalbewegung des Punktes D. Aufgrund der durch die Pendelstütze 12 (oder eines anderen an deren Stelle vorgesehenen Elements) angenäherten Geraden-Führung des Punktes D findet eine angenäherte Geraden-Führung des Punktes O zumindest in einem größeren Umgebungs-Bereich um die Konstruktionslage (gemäß Fig.1) statt. Unter kinematischer Betrachtungsweise erstrecken sich dabei die beiden Lenker 11, 10 in einer vertikalen Projektion im wesentlichen in Fahrzeug-Längsrichtung und sind aufgrund ihrer Lagerung jeweils in einer im wesentlichen vertikalen Ebene verschwenkbar. Dabei sie nochmals wiederholt, dass der Begriff "im wesentlichen" mit der Tatsache gleichzusetzen ist, dass die Lenker bzw. deren "Ersatzgeraden" in einem Kinematik-Modell um nicht mehr als einen Winkel in der Größenordnung von 6° bis 10° gegenüber der Fahrzeug-Längsrichtung geneigt verlaufen und aufgrund ihrer Lagerung in einer Ebene, die um nicht mehr als einen Winkel in der Größenordnung von 6° bis 10° gegenüber der Vertikalen geneigt ist, verschwenkbar sind.

Der besondere Vorteil dieser soweit vorgestellten Einzelradaufhängung liegt in deren geringem Bauraumbedarf insbesondere in Fahrzeug-Querrichtung betrachtet. Da kein radführender Lenker benötigt wird bzw. vorhanden ist, der sich in Fahrzeug-Querrichtung erstreckt bzw. in einer vertikalen Projektion um einen signifikanten Winkelbetrag gegenüber der Fahrzeug-Längsachse geneigt verläuft, wird der Bauraum zwischen den beiden Rädern einer diese Radaufhängung aufweisenden Achse eines zweispurigen Fahrzeugs nicht durch radführende Lenker eingeschränkt. Somit steht beispielsweise an einen PKW ausreichender Freiraum für einen Kofferraum oder für bspw. elektrische Energiespeicher zur Verfügung. Dies gilt insbesondere auch deshalb, weil zusätzlich zu den bislang beschriebenen Merkmalen der erste. Lenker 11 und der zweite Lenker 10 zumindest in Konstruktionslage innerhalb des von einer Felge des wie üblich einen mit Luft befüllten Reifen, weicher wie üblich auf dieser genannten Felge aufgezogen ist, aufweisenden Rades eingeschlossenen oder beschriebenen bzw. begrenzten Raumes 9 liegen. Dieser Raum 9 oder Hohl-Raum 9 des Rades wurde weiter oben bereits ausführlich definiert, wird jedoch auch aus der später noch erläuterten Fig.4 ersichtlich.

Die Aussage im vorhergehenden Absatz, dass kein sich in Fahrzeug-Querrichtung erstreckender Lenker vorhanden ist, ist dabei so zu verstehen, dass das genannte Verbindungsglied 13, mittels dessen die beiden sich im wesentlichen in Fzg.-Längsrichtung erstreckenden Lenker 11, 10 gelenkig im wesentlichen um die Fzg.-Querachse verschwenkbar wie bei einer Schere miteinander verbunden sind, kein radführender Lenker ist. Betrachtete man jedoch dieses Verbindungsglied 13 auch als Lenker, so befindet sich jedenfalls bei der vorliegenden erfindungsgemäßen Radaufhängung, bei der die beiden sich im wesentlichen in Fzg.-Längsrichtung erstreckenden Lenker 11, 10 innerhalb des von der Felge des Rades eingeschlossenen oder beschriebenen Raumes 9 (= Hohlraumes 9) liegen, auch dieses Verbindungsglied innerhalb des besagten Raumes 9 und benötigt somit keinen zusätzlichen wertvollen Bauraum seitlich des Rades. Dabei sei ergänzend noch darauf hingewiesen, dass sich eine erfindungsgemäße Radaufhängung mit geringem Bauraumbedarf auch dann ergibt, wenn nur der erste das Radiager O tragende Lenker 11 innerhalb des Rades bzw. im besagten von der Rad-Felge begrenzten oder beschriebenen Raum 9 liegt, während der zweite Lenker 10 teilweise oder auch vollständig seitlich außerhalb dieses Raumes 9 liegen kann. Vorteilhaft ist es dabei jedoch, wenn der zweite Lenker 10 in einer Projektion in Fahrzeug-Querrichtung, d.h. in Richtung der Drehachse des Rades betrachtet innerhalb des von der Rad-Felge begrenzten Raumes 9 liegt.

Nun auf **Figur 4** Bezug nehmend ist hierin das entsprechende, d.h. in Verbindung mit den Figuren 1 - 3 erwähnte Rad 1 des Fahrzeugs bzw. Personenkraftwagens sehr stark vereinfacht in einem Horizontalschnitt dargestellt. Das Rad 1 weist eine Felge 1 a, eine diese tragende Radscheibe 1b und einen auf der Felge 1a aufgezogenen Reifen 1 c auf. In der vorliegenden Projektion senkrecht zur Drehachse 1* des Rades 1 ist durch die der Drehachse 1* zugewandte Innenwand des sich im wesentlichen parallel zur Rad-Drehachse 1* erstreckenden Felgenbetts der Felge 1a sowie durch die im Bereich der dem Fahrzeug-Aufbau abgewandten Außenseite des Rades 1 liegende Radscheibe 1b und die andere dem Fahrzeug-Aufbau 15 zugewandte, ebenso wie die Radscheibe 1b auf der Rad-Drehachse 1* senkrecht stehende Randebene der Felge 1a ein Raum 9 oder Hohlraum 9 von der Felge 1a eingeschlossen oder beschrieben. Baulich innerhalb dieses von der Felge 1a eingeschlossenen oder beschriebenen Raumes 9 ist ein Getriebe (3-4-5-6-7) angeordnet. Dieses Getriebe (3-4-5-6-7) weist eine erste Übersetzungsstufe (3-4) auf, die in einem ersten Getriebegehäuse 10* angeordnet ist, und eine zweite Übersetzungsstufe (6-7), die in einem zugeordneten zweiten Getriebegehäuse 11* angeordnet ist. Jede Übersetzungsstufe wird hier durch zwei Getrieberäder 3, 4 bzw. 6, 7 in Form miteinander kämmender Zahnräder gebildet.

Das Getriebe (3-4-5-6-7) wird von einem seitlich versetzt zum Rad 1 und somit außerhalb des von der Felge 1 a eingeschlossenen oder beschriebenen Raumes 9 angeordneten Elektromotor M angetrieben. Der Elektromotor M ist vorzugswese fest mit der Karosserie des Fahrzeugs, d.h. mit dem Fahrzeug-Aufbau 15 verbunden, so dass er an Einfederbewegungen und Ausfederbewegungen des Rades 1 gegenüber der Fahrzeug-Karosserie bzw. gegenüber dem Fzg.-Aufbau 15 nicht teilnimmt. Auf einer Motorwelle 2 bzw. Antriebswelle 2 des Elektromotors M sitzt ein erstes Getrieberad 3 der ersten Übersetzungsstufe (3-4) in Form eines Antriebsritzels, welches mit einem auf einer Verbindungswelle 5 angeordneten zweiten Getrieberad 4 der ersten Übersetzungsstufe (3-4) kämmt. Die seitlich bzw. in Richtung der Drehachse 1* des Rades 1 axial nach außen versetzt zu der ersten Übersetzungsstufe (3-4) angeordnete zweite Übersetzungsstufe (6-7) des Getriebes (3-4-5-6-7) weist ein ebenfalls auf oder an der Verbindungswelle 5 angeordnetes erstes Getrieberad 6 auf, welches mit einem zweiten Getrieberad 7 der zweiten Übersetzungsstufe (6-7) in Form eines Abtriebsrads kämmt. Dieses Abtriebsrad oder zweite Getrieberad 7 der zweiten Übersetzungsstufe (6-7) ist auf einer Abtriebswelle 8 angeordnet, die ihrerseits drehfest mit der Radscheibe 1b verbunden ist, so dass die Abtriebswelle 8 unmittelbar das Rad 1 antreibt.

Wie bereits erwähnt ist der Elektromotor M fest in Bezug auf die Karosserie 15 eines hier nicht dargestellten Fahrzeugs angeordnet. Dabei kann das über die anhand der Figuren 1 -3 erläuterten Lenker 11, 10 geführte Rad 1 in Bezug auf den Elektromotor M und dessen Antriebswelle 2 ausgehend von der Konstruktionslage im wesentlichen in Vertikalrichtung (und somit im wesentlichen senkrecht zur Zeichenebene der Fig.4) einfedern bzw. ausfedern. Beim Einfedern vollführen die Übersetzungsstufen (3-4) und (6-7) bzw. deren Getriebegehäuse 10*, 11 * relativ zueinander eine "Scherenbewegung", wobei das erste Getriebegehäuse 10* relativ zur Antriebswelle 2 und das zweite Getriebegehäuse 11 * relativ zur Abtriebswelle 8 verschwenkt wird. Miteinander gekoppelt sind die beiden Getriebegehäuse 10*, 11* über die Verbindungswelle 5 und/oder das bereits genannte Verbindungsglied 13, wie im weiteren erläutert wird.

Wie vor der Figurenbeschreibung ausgeführt ist die Anordnung der soweit beschriebenen Bauelemente so getroffen, dass die Rotationsachse der das zweite Getrieberad 4 der ersten Übersetzungsstufe (3-4) des Getriebes (3-4-5-6-7) mit dem ersten Getrieberad 6 der zweiten Übersetzungsstufe (6-7) verbindenden Verbindungswelle 5 mit der durch das Verbindungsglied 13 der beiden Lenker 10, 11 dargestellten Drehachse 13* zusammenfällt. Auch diese das Rad 1 bzw. das Radlager O führenden Lenker 10, 11 sind in Fig.4 sehr stark vereinfacht dargestellt, wobei in diesem konkreten Ausführungsbeispiel beide Lenker 10, 11 jeweils in Form eines Gehäuses ausgebildet sind, innerhalb dessen die zwei Getrieberäder einer Übersetzungsstufe (3-4) bzw. (6-7) angeordnet sind. Im vorliegenden Ausführungsbeispiel stellt der erste Lenker 11 zugleich das Getriebegehäuse 11* der zweiten

Übersetzungsstufe (6-7) dar und es stellt der zweite Lenker 10 zugleich das Getriebegehäuse 10* der ersten Übersetzungsstufe (3-4) dar, jedoch ist diese vorteilhafte Funktionsvereinigung kein zwingendes Merkmal der vorliegenden Erfindung. Wesentlich ist vielmehr das zu Beginn dieses Absatzes dargestellte Zusammenfallen der Rotationsachse der Verbindungswelle 5 des Getriebes (3-4-5-6-7) mit der Drehachse 13* des Verbindungsgliedes 13 der beiden Lenker 11, 10. Dabei sei nochmals darauf hingewiesen, dass insbesondere der erste Lenker 11 in einer realen Ausführungsform einer erfindungsgemäßen Einzelradaufhängung (vgl. hierzu die im weiteren erläuterten Figuren 5 - 7 sowie die Figuren 4 - 7 der bereits mehrfach genannten internationalen Anmeldung PCT/EP2010/067478) anders als in Fig.4 dargestellt ausgebildet ist und insbesondere mit seinem dem Radlager O gegenüberliegenden Abschnitt, an welchem die Pendelstützte 12 gemäß den Figuren 1 - 3 angelenkt ist, aus dem Raum 9 herausragt. In seinem entsprechenden aus dem Raum 9 herausragenden Abschnitt ist dieser erste Lenker 11 dann auch nicht nach Art eines Gehäuses ausgebildet.

Im vorliegenden Ausführungsbeispiel fällt das Verbindungsglied 13 der beiden Lenker 11, 10 mit der Verbindungswelle 5 der beiden Übersetzungsstufen (3-4) und (6-7) des Getriebes (3-4-5-6-7) zusammen, jedoch ist diese vorteilhafte Funktionsvereinigung kein zwingendes Merkmal der vorliegenden Erfindung. Zur Realisierung dieser vorteilhaften Funktionsvereinigung kann jeder der Lenker 11, 10 auf der Verbindungswelle 5 über geeignete Lager L um diese Verbindungswelle 5 geringfügig verdrehbar gelagert sein. In vergleichbarer Weise kann der zweite Lenker '1Q auf der Antriebswelle 2 über geeignete Lager L um die Antriebswelle 2 geringfügig verdrehbar gelagert sein und es kann der erste Lenker 11 auf der Abtriebswelle 8 über geeignete Radlager O um die Abtriebswelle 8 geringfügig verdrehbar gelagert sein. Somit wird, das Rad 1 letztendlich von der Antriebswelle 2 des Elektromotors M, anstelle dessen selbstverständlich auch ein anderes Antriebsaggregat vorgesehen sein kann, getragen und dabei durch die beiden Lenker 11, 10 in der beschriebenen Weise geführt. Jedoch ist auch die vorliegend beschriebene Abstützung des Rades 1 gegenüber dem Fahrzeug-Aufbau (über den Elektromotor M bzw. allgemein ein Antriebsaggregat) kein zwingendes Merkmal der vorliegenden Erfindung; vielmehr ist eine andere Ausführungsform in den später noch erläuterten Figuren 5 - 7 gezeigt.

Ebenso wie die in **Figur 4** beiden Radlager O auf der Abtriebswelle 8 das Radlager O der Figuren 1 - 3 bilden, bilden die beiden Lager L auf der Antriebswelle 2 von Figur 4 den Punkt A in den Figuren 1 - 3. In gleicher Weise bilden die beiden Lager L zwischen der Verbindungswelle 5 und dem ersten Lenker 11 den Punkt C in den Figuren 1 - 3, während die beiden Lager L zwischen der Verbindungswelle 5 und dem zweiten Lenker 10 den Punkt B in den Figuren 1 - 3 bilden. Vorliegend sind dabei an jeder Lagerstelle eines der beiden Lenker 11, 10 zwei Lager L abstrakt dargestellt, da jeder Lenker ein bspw. kastenförmiges Gehäuse 11* bzw. 10* bildet und folglich die beiden einander gegenüber liegenden Außenwände des jeweiligen "Lenker-Gehäuses" 11* bzw. 10*, über die der jeweilige Lenker 11 bzw. 10 auf einer der Wellen, nämlich auf der Antriebswelle 2 und/oder auf der Verbindungswelle 5 und/oder auf der Abtriebswelle 8 gelagert ist, jeweils über ein Lager L gelagert sind, jedoch sind auch hier wieder abweichende Formgebungen möglich. Beispielsweise kann der wesentliche Bestandteil eines Lenkers 10 bzw. 11 quasi wannenförmig gestaltet sein und dabei eine Übersetzungsstufe (3-4) bzw. (6-7) aufnehmen, während zur Bildung eines im Hinblick auf die Schmierung dieser Übersetzungsstufe sinnvollen geschlossenen Getriebegehäuses 10* bzw. 11* diese "Wanne" durch ein Deckelteil abgedeckt sein kann, welches nicht auf der Verbindungswelle 5 oder dem Verbindungsglied 13 gelagert ist.

Wie in **Fig.4** etwas übertrieben dargestellt ist, ist die Verbindungswelle 5, die hier gleichzeitig das Verbindungsglied 13 der beiden Lenker 11, 10 bildet, nicht exakt parallel zur mit der Rotationsachse der Abtriebswelle 8 zusammenfallenden Drehachse 1* des Rades 1 ausgerichtet, sondern gegenüber dieser geringfügig schräggestellt, wobei diese Schrägstellung wie figürlich dargestellt in einer die Rotationsachse (= Drehachse 13*) dieser Verbindungswelle 5 enthaltenden Horizontalebene und/oder in einer die Rotationsachse (= Drehachse 13*) dieser Verbindungswelle 5 enthaltenden Vertikalebene vorliegen kann. Im erstgenannten Fall ist somit die Drehachse 13* und die Rotationsachse der Verbindungswelle 5 in einer vertikalen Projektion betrachtet geringfügig gegenüber der Fahrzeug-Querrichtung geneigt, während im zweitgenannten Fall die Drehachse 13* und die Rotationsachse der Verbindungswelle 5 in Fahrzeug-Längsrichtung betrachtet gegenüber der Horizontalen geneigt ist. Dabei ist ausdrücklich auch eine Kombination dieser beiden Neigungsrichtungen möglich.

Da die Rotationsachse der geringfügig schräg gestellten Verbindungswelle 5 erfindungsgemäß gleichzeitig die Drehachse 13* des Verbindungsglieds 13 der beiden Lenker 11, 10 ist, können - wie vor der Figurenbeschreibung bereits ausgeführt wurde - durch ein geringfügiges Schrägstellen dieser Lenker-Drehachse 13* (oder des entsprechenden Verbindungsglieds 13) gezielte Veränderungen des Rad-Sturzes oder der Rad-Spur des Rades 1 in Verbindung mit einer Einfederbewegung oder Ausfederbewegung des Rades 1 gegenüber dem Fzg.-Aufbau 15 erzeugt werden. Die Verbindungswelle 5 bzw. deren Rotationsachse verläuft damit zwar weiterhin im wesentlichen in Richtung der Fzg.-Querachse, dabei jedoch in Konstruktionslage (gemäß Fig.1) in einer vertikalen Projektion geringfügig gegenüber dieser Querachse geneigt und/oder in einer Projektion in Richtung der Fahrzeug-Längsachse geringfügig gegenüber der Horizontalen geneigt. In diesem Sinne ist auch die eingangs mehrmals genannte WinkelAbweichung von bis zu einem Winkel im Bereich zwischen 6° und 10° gegenüber einer im wesentlichen vertikalen Richtung, nämlich bezüglich der Ebene, in welcher die Lenker 11, 10 verschwenkbar sind, oder gegenüber einer sich im wesentlichen in Fahrzeug-Längsrichtung erstreckenden Richtung, nämlich bezüglich der Erstreckungsrichtung der Lenker 11, 10 in einer vertikalen Projektion unter kinematischer Betrachtungsweise, zu verstehen.

Um die geringfügige Schrägstellung der Verbindungswelle 5 gegenüber der Rad-Drehachse 1* und somit auch gegenüber der Rotationsachse der Abtriebswelle 8 jedenfalls bei Verwendung von Zahnrädern als Getrieberäder 3, 4, 6, 7 realisieren zu können, ist zumindest das erste Getrieberad 6 der zweiten Übersetzungsstufe (6-7) als Kegelzahnrad mit geringem Öffnungswinkel (Winkel in der Kegelspitze) ausgeführt. (Sollten anstelle von Zahnrädern in dieser Übersetzungsstufe andere Getrieberäder, bspw. solche eines endlosen Zugmittelgetriebes vorgesehen sein, so ist das erste Getrieberad 6 der zweiten Übersetzungsstufe (6-7) als entsprechende$ Kegelrad ausgeführt).

Vorliegend ist auch das ebenso wie das erste Getrieberad 6 der zweiten Übersetzungsstufe (6-7) auf der Verbindungswelle 5 sitzende zweite Getrieberad 4 der ersten Übersetzungsstufe (3-4) als Kegelzahnrad, allgemein Kegelrad ausgebildet, um eine Ausrichtung der Antriebswelle 2 im wesentlichen in Fahrzeug-Querrichtung darstellen zu können, jedoch ist diese Ausgestaltung nicht zwingend. Mit entsprechend großer Schrägstellung der Antriebswelle 2 gegenüber der Abtriebswelle 8 könnte das zweite Getrieberad 4 der ersten Übersetzungsstufe (3-4) trotz Verwendung eines einfachen stirnverzahnten Antriebsritzels als erstem Getrieberad 3 der ersten Übersetzungsstufe (3-4) auch als einfaches Stirnzahnrad ausgebildet sein.

In den **Figuren 1 - 4** nicht dargestellt ist eine vorteilhafte Weiterbildung, wonach in der gelenkigen Verbindung zwischen dem ersten Lenker 11 und dem zweiten Lenker 10, d.h. im Bereich von deren gegenseitiger durch die Punkte B, C (vgl. Fig.1) verlaufender Drehachse 13*, ein die Bewegungen des Rades 1 gegenüber dem Fahrzeug-Aufbau 15 beeinflussendes Rotations-Dämpferelement und/oder ein entsprechendes Rotations-Federelement vorgesehen ist. Diese genannten Elemente können in besonders raumsparender Weise die Funktion einer üblichen Tragfeder (zwischen Rad 1 und Fzg.-Aufbau 15) bzw, eines Schwingungsdämpfers einer üblichen Radaufhängung übernehmen. Von Vorteil ist dabei, dass sich in dieser Drehachse 13* der beiden Lenker 11, 10 gegeneinander mit einer Einfeder-Bewegung oder Ausfeder-Bewegung des Rades 1 gegenüber dem Fzg.-Aufbau 15 relativ große Schwenkwinkel oder Drehwinkel der beiden Lenker 11, 10 gegeneinander einstellen. Alternativ oder zusätzlich kann jedoch auch in der gelenkigen Anbindung des zweiten Lenkers 10 am Fahrzeug-Aufbau 15, d.h. im Punkt A von Fig.1, ein die Bewegungen des Rades 1 gegenüber dem Fahrzeug-Aufbau 15 beeinflussendes Rotations-Dämpferelement und/oder Rotations-Federelement vorgesehen sein. Das im weiteren erläuterte detaillierte Ausführungsbeispiel zeigt im übrigen solche Elemente.

Noch auf die grundsätzliche Gestaltung eingehend kann die gelenkige Verbindung zwischen dem ersten Lenker 11 und dem zweiten Lenker 10 und/oder die gelenkige Verbindung zwischen dem zweiten Lenker 10 und dem Fahrzeug-Aufbau 15 (im Punkt A von Fig.1) in Form eines geringfügige elastokinematische Relativbewegungen erlaubenden Gummilagers ausgeführt sein, so dass gezielt elastokinematische Effekte im Hinblick auf die Fahrdynamik und den Fahr-Komfort eines mit einer solchen Einzelradaufhängung oder einer entsprechenden Hinterachse versehenen Kraftfahrzeuges genutzt werden können. Weiterhin wurde bereits erwähnt, dass die Anlenkung der Pendelstütze 12 am ersten Lenker 11 und am Fahrzeug-Aufbau 15 vorzugsweise derart gestaltet ist, dass diese Pendelstütze 12 nur einen (als Zahlwort!) kinematischen Freiheitsgrad der Radaufhängung bindet. Es kann jedoch diese sog. Pendelstütze 12 auch in Form eines Dreiecks-Lenkers mit verbreiteter Basis im Punkt E von Fig.1, d.h. im Anlenkbereich am Fzg.-Aufbau 15 ausgebildet sein, wodurch die auf das Rad 1 im Fahrbetrieb einwirkenden Querkräfte nicht nur im Punkt A gegenüber dem Fzg.-Aufbau abgestützt werden können, sondern zusätzlich im genannten Punkt E.

Im weiteren wird ein im Detail auskonstruiertes Ausführungsbeispiel erläutert. Dabei zeigen die beigefügten **Figuren 5-7** dieses Ausführungsbeispiel jeweils in einem die Rad-Drehachse 11* enthaltenden Horizontalschnitt, wobei in **Figur 5** sämtliche geschnittenen Bauelemente schraffiert dargestellt sind, während der besseren Erkennbarkeit halber in **Figur 6** nur das Rad 1 und die beiden radführenden Lenker 10, 11 mit deren Verbindungsglied 13 schraffiert sind und in **Figur 7** nur das Rad 1 mit den Elementen des genannten Getriebes (3-4-5-6-7) schraffiert dargestellt sind. Zur detaillierten Gestaltung der Lenker 10, 11 wird ergänzend auf das in der bereits mehrfach genannten internationalen Anmeldung PCT/EP2010/067478 dort anhand der Figuren 4 - 7 detailliert beschriebene Ausführungsbeispiel verweisen, das viele Gemeinsamkeiten mit dem vorliegenden Ausführungsbeispiel aufweist. Dabei sind die Bezugsziffern solcher Bauelemente, die in den vorliegenden Prinzip-Darstellungen der Figuren 1 - 4 nicht gezeigt sind und im wesentlichen gleich oder ähnlich aus den Figuren 4 - 7 der internationalen Anmeldung PCT/EP2010/067478 übernommen sind, vorliegend mit den um den Wert "100" erhöhten Bezugsziffern aus der PCT/EP2010/067478 gekennzeichnet. So trägt also beispielsweise ein in der internationalen Anmeldung PCT/EP2010/067478 mit der Bezugsziffer 9 gekennzeichneter Träger, der im vorliegenden Ausführungsbeispiel identisch vorgesehen ist, vorliegend die Bezugsziffer 109.

Zunächst auf **Figur 6** Bezug nehmend erkennt man das Rad 1 mit seiner Felge 1a und der Radscheibe 1b, welche mittels hier nicht sichtbarer Schrauben an einem Mitnehmerflansch 131 befestigt ist, der zusammen mit der anhand von Fig.7 noch näher erläuterten Abtriebswelle 8 ein gemeinsames Bauteil bildet. Über ein zweireihiges Schrägkugellager 121, welches das Radlager O der Figuren 1- 4 bildet, ist dieser Mitnehmerflansch 131 auf einem sog. Zentraldorn 11 c des ersten Lenkers 11 drehbar gelagert, welcher praktisch den sog. Radträger darstellt und ein Bestandteil des ersten Lenkers 11 ist. Insgesamt besteht dieser erster Lenker 11 im wesentlichen aus einem wannenförmigen Lenkerteil 11a, einem dieses teilweise abdeckende Deckelteil 11b, dem genannten Zentraldorn 11 c und einem Fortsatz 11d, an dem über einen Bolzen 201 die bereits genannte Pendelstütze 12 abgestützt ist. Der zweite Lenker 10 ist ebenfalls mehrteilig ausgeführt und besteht insbesondere aus einem Lenkerarmteil 10a und einem einen Hohlraum innerhalb dieses Lenkerarmteils 10a überdeckenden Lenker-Deckelteil 10b. in einer auch durch den geeignet geformten Zentraldorn 11 c und den Fortsatz 11 d des ersten Lenkers 11 gebildeten kreiszylindrischen Aussparung dieses ersten Lenkers 11 ist über zwei nebeneinander angeordnete Kugellager 202 der zweite Lenker 10 gegenüber dem ersten Lenker 11 drehbar gelagert. Als ein anhand der Figuren 1 - 4 erläutertes Verbindungsglied 13 zwischen diesen beiden Lenkern 10, 11 fungiert dabei ein nicht näher dargestelltes Rotations-Dämpferelement 135, dessen Drehachse die Lenker-Drehachse 13* ist. Ferner ist vorliegend als Verbindungsglied 13 eine Hülse mit der Bezugsziffer 13 gekennzeichnet, die auf einen Abschnitt des Gehäuses des Rotations-Dämpferelements 135 aufgesteckt ist.

Während sich der erste Lenker 11 des vorliegenden Ausführungsbeispiels vom ersten Lenker des in der mehrfach genannten internationalen Anmeldung PCT/EP2010/067478 erläuterten Ausführungsbeispiel insbesondere im Bereich des Radträgers bzw. Zentraldorns 11 c stark unterscheidet, ist der zweite Lenker 10 des vorliegenden Ausführungsbeispiels sehr ähnlich dem zweiten Lenker des in der genannten internationalen Anmeldung enthaltenen Ausführungsbeispiels gestaltet. Insbesondere ist die schwenkbare Lagerung dieses zweiten Lenkers 10 gegenüber dem Fahrzeug-Aufbau sehr ähnlich gestaltet, nämlich mittels eines Trägers 109 und einer Trägerwelle 108 über Kegelrollenlager 124, weshalb vorliegend hierauf nicht näher eingegangen wird. Gleiches gilt für die Ausgestaltung und Anordnung eines Rotations-Federelementes 115, das hier analog einem in der mehrfach genannten internationalen Anmeldung PCT/EP2010/067478 erläuterten Ausführungsbeispiel in Form einer Spiralfeder zwischen dem zweiten Lenker 10 und dem Fahrzeug-Aufbau 15 vorgesehen und eingespannt angeordnet ist, um die durch die beiden Lenker 10, 11 möglichen Einfeder- und Ausfeder-Bewegungen des Rades 1 (in vertikaler Richtung) gegenüber dem Fahrzeug-Aufbau 15 in gewünschter Weise zu beeinflussen.

Nunmehr sei auf **Figur 7** verwiesen, in der das eingangs sowie in Figur 4 der vorliegenden Anmeldung beschriebene Getriebe (3-4-5-6-7-8) durch Schraffur hervorgehoben dargestellt ist. Nicht dargestellt ist in Figur 7 der genannte Elektromotor (M), dessen Abtriebswelle oder Motorwelle die Antriebswelle 2 bildet oder in diese übergeht, wobei die Drehachse dieser Antriebswelle 2 mit der Achse 108* der Trägerwelle 108 zusammenfällt. Wie ersichtlich ist die Antriebswelle 2 dabei über Nadellager 203 innerhalb der hohl ausgeführten Trägerwelle 108 gelagert. Am innerhalb des von der Felge 1a des Rades 1 beschriebenen Raumes 9 liegenden Ende der Antriebswelle 2 ist vorliegend einstückig an dieser das erste Getrieberad 3 der ersten Übersetzungsstufe (3-4) des Getriebes (3-4-5-6-7-8) angeformt, das mit dem zweiten Getrieberad 4 dieser Übersetzungsstufe (3-4) kämmt. Vorliegend ist direkt an dieses zweite Getrieberad 4 die als Hohlwelle ausgeführte Verbindungswelle 5 angeformt, innerhalb derer sich das Rotations-Dämpferelement 135 befindet. Diese Verbindungswelle 5 ist über Nadellager 204 in einer kreiszylindrischen Aussparung im zweiten Lenker 10 drehbar gelagert, wobei die Rotationsachse der Verbindungswelle 5 mit der Lenker-Drehachse 13* zusammenfällt.

Am dem Getrieberad 4 abgewandten Ende der Verbindungswelle 5 ist das erste Getrieberad 6 der zweiten Übersetzungsstufe (6-7) geeignet befestigt und über ein Zylinderrollenlager 205 quasi auf dem Verbindungsglied 13, als das hier eine auf einem Gehäuseabschnitt des Rotations-Dämpferelements 135 aufgesteckte Hülse gekennzeichnet ist, drehbar gelagert. Mit diesem ersten Getrieberad 6 kämmt das als Hohlrad ausgeführte zweite Getrieberad 7 dieser zweiten Übersetzungsstufe (6-7), das mit der ebenfalls als Hohlwelle ausgeführten (und hier nahezu die Form einer Tellerfeder aufweisenden) Abtriebswelle 8 verbunden ist, welche - wie zu Beginn der Erläuterung von Fig.6 bereits erwähnt wurde, quasi in den Mitnehmerflansch 131 übergeht. Selbstverständlich fällt die Rotationsachse des zweiten Getrieberades 7 und der Abtriebswelle 8 mit der Drehachse 1* des Rades 1 zusammen.

Jeder der beiden Übersetzungsstufen (3-4) und (6-7) ist von einem eigenen gegenüber der Umgebung im wesentlichen geschlossenen Gehäuse 10* bzw. 11* umgeben, um eine Verschmutzung der Getrieberäder 3, 4, 6, 7 zu verhindern und einen erforderlichen Schmierstoff an diesen Getrieberädern 3, 4, 6, 7 zu halten und nicht in die Umgebung gelangen zu lassen. Dabei ist das Getriebegehäuse 10* der ersten Übersetzungsstufe (3-4) durch den zweiten Lenker 10 gebildet, indem die beiden Getrieberäder 3, 4 und zugehörige Abschnitte der Wellen 2, 5 unter Vorsehen geeigneter Dichtungen in dem bereits genannten vom Lenkerarmteil 10a und vom Lenker-Deckelteil 10b umhüllten Hohlraum angeordnet sind. In vergleichbarer Weise ist das Getriebegehäuse 11* der zweiten Übersetzungsstufe (6-7) durch den ersten Lenker 11 gebildet, indem die beiden Getrieberäder 6, 7 und zugehörige Abschnitte der Wellen 5, 8 unter Vorsehen geeigneter Dichtungen in dem Hohlraum des wannenförmigen Lenkerteils 11a, der im Zusammenwirken mit dem bereits genannten dieses teilweise abdeckenden Deckelteil 11b und dem Zentraldorn 11 c sowie dem Rotations-Dämpferelement 135 und dem zweiten Lenker 10 gegenüber der Umgebung im wesentlichen dicht abgeschlossen ist, angeordnet sind.

## Patentansprüche

1. Einzelradaufhängung eines nicht lenkbaren angetriebenen Rades (1) eines zweispurigen Fahrzeugs mit zwei sich unter kinematischer Betrachtungsweise in einer vertikalen Projektion im wesentlichen in Fahrzeug-Längsrichtung erstreckenden und aufgrund ihrer Lagerung jeweils in einer im wesentlichen vertikalen Ebene verschwenkbaren Lenkern (11, 10), wobei am ersten Lenker (11) direkt oder indirekt ein das Rad tragendes Radlager (O) befestigt ist und dieser erste Lenker (11) mit seinem Endabschnitt über eine sich in Konstruktionslage zumindest annähernd in Vertikalrichtung erstreckende Pendelstütze (12) oder einen Dreieckslenker mit verbreiterter Basis am Fahrzeug-Aufbau (15) abgestützt ist
und wobei der andere zweite Lenker (10) einerseits mit nur einem kinematischen Dreh-Freiheitsgrad gelenkig direkt oder indirekt am Fahrzeug-Aufbau (15) abgestützt und andererseits mit nur einem kinematischen Dreh-Freiheitsgrad gelenkig mit dem ersten Lenker (11) zwischen dem Radlager (O) und dem Befestigungspunkt (D) der Pendelstützte (12) über ein eine Drehachse (13*) darstellendes Verbindungsglied (13) verbunden ist,
und wobei der erste Lenker (11) zumindest mit seinem sich vom Radlager (O) zum Verbindungsglied (13) mit dem zweiten Lenker (10) erstreckenden Abschnitt innerhalb des von einer Felge (1a) des Rades (1) eingeschlossenen oder beschriebenen Raumes (9) liegt,
und wobei das Rad (1) über eine Antriebswelle (2) und ein sich an dieses anschließendes zumindest teilweise innerhalb des von der Felge (1a) des Rades (1) eingeschlossenen oder beschriebenen Raumes (9) angeordnetes Getriebe (3-4-5-6-7), welches mindestens zwei in Axialrichtung des Rades (1) zueinander versetzt angeordnete und durch Getrieberäder (3, 4, 6, 7) gebildete Übersetzungsstufen (3-4), (6-7) aufweist, antreibbar ist,
**dadurch gekennzeichnet, dass** die Rotationsachse einer das zweite Getrieberad (4) der ersten Übersetzungsstufe (3-4) mit dem ersten Getrieberad (6) der zweiten Übersetzungsstufe (6-7) verbindenden Verbindungwelle (5) mit der durch das Verbindungsglied (13) der beiden Lenker dargestellten Drehachse (13*) zusammenfällt.

2. Einzelradaufhängung nach Anspruch 1,
**dadurch gekennzeichnet, dass** auch der zweite Lenker (10) zumindest in Konstruktionslage und zumindest in einer Projektion in Richtung der Drehachse des Rades und/oder das Getriebe (3-4-5-6-7) mit seinen beiden Übersetzungsstufen (3-4), (6-7) innerhalb des von einer Felge (1a) des Rades (1) eingeschlossenen oder beschriebenen Raumes (9) liegen.

3. Einzelradaufhängung nach Anspruch 1 oder 2,
**dadurch gekennzeichnet, dass** die Drehachse (13*) der gelenkigen Verbindung zwischen dem ersten Lenker (11) und dem zweiten Lenker (10) in Konstruktionslage geringfügig gegenüber der Horizontalen und/oder gegenüber der Fahrzeug-Querrichtung geneigt ist.

4. Einzelradaufhängung nach Anspruch 3,
**dadurch gekennzeichnet, dass** zumindest das erste Getrieberad (6) der zweiten Übersetzungsstufe (6-7), gegebenenfalls auch das zweite Getrieberad (4) der ersten Übersetzungsstufe (3-4), als Kegelrad, insbesondere als Kegelzahnrad, ausgeführt ist.

5. Einzelradaufhängung nach Anspruch 4,
**dadurch gekennzeichnet, dass** das zweite Getrieberad (7) der zweiten Übersetzungsstufe (6-7) als Hohlrad mit Innenverzahnung ausgeführt ist.

6. Einzelradaufhängung nach einem der vorangegangenen Ansprüche,
**dadurch gekennzeichnet, dass** die Rotationsachse der Antriebswelle (2) mit der Drehachse des zweiten Lenkers (10), in welcher dieser mit nur einem kinematischen Dreh-Freiheitsgrad gelenkig am Fahrzeug-Aufbau (15) abgestützt ist, zusammenfällt.

7. Einzelradaufhängung nach einem der vorangegangenen Ansprüche,
**dadurch gekennzeichnet, dass** bei Zusammenfallen der Drehachse eines der beiden Lenker (11, 10) mit einer Rotationsachse einer Übersetzungsstufe (3-4), (6-7) des Getriebes (3-4-5-6-7) der entsprechende Lenker (11, 10) auf einer diese Rotationsachse aufweisenden Welle (2, 5, 8) drehbar gelagert ist.

8. Einzelradaufhängung nach einem der vorangegangenen Ansprüche,
**dadurch gekennzeichnet, dass** zumindest einer der Lenker (11, 10) zumindest abschnittsweise nach Art eines Gehäuses (11*, 10*) ausgebildet ist, innerhalb dessen die zwei Getrieberäder (3, 4, 6, 7) einer Übersetzungsstufe (3-4), (6-7) angeordnet sind.

9. Einzelradaufhängung nach einem der vorangegangenen Ansprüche,
**dadurch gekennzeichnet, dass** in der gelenkigen Verbindung zwischen dem ersten Lenker (11) und dem zweiten Lenker (10) ein die Bewegungen des Rades (1) gegenüber dem Fahrzeug-Aufbau (15) beeinflussendes Rotations-Dämpferelement (135) und/oder Rotations-Federelement vorgesehen ist.

10. Einzelradaufhängung nach einem der vorangegangenen Ansprüche,
**dadurch gekennzeichnet, dass** in der gelenkigen Anbindung des zweiten Lenkers (10) am Fahrzeug-Aufbau (15) ein die Bewegungen des Rades (1) gegenüber dem Fahrzeug-Aufbau (15) beeinflussendes Rotations-Dämpferelement und/oder Rotations-Federelement (115) vorgesehen ist.

## Claims

1. An individual wheel suspension for a non-steerable driven wheel (1) of a two-track vehicle with two control arms (11, 10), which extend in a kinematic mode of viewing in a vertical projection substantially in the vehicle longitudinal direction and, because of their mounting, can in each case be pivoted in a substantially vertical plane, wherein a wheel bearing (O) carrying the wheel is directly or indirectly fastened on the first control arm (11) and this first control arm (11) is supported with its end portion by means of a pendulum support (12), which extends at least approximately in the vertical direction in the construction position, or a wishbone with a broadened base on the vehicle body (15) and wherein the other second control arm (10) is, on the one hand, supported with only one kinematic degree of rotational freedom in an articulated manner directly or indirectly on the vehicle body (15) and, on the other hand, is connected in an articulated manner with only one kinematic degree of rotational freedom to the first control arm (11) between the wheel bearing (O) and the fastening point (D) of the pendulum support (12) by means of a connection member (13) representing a rotational axis (13*), and wherein the first control arm (11), at least with its portion extending from the wheel bearing (O) to the connection member (13) with the second control arm (10) is located within the space (9) enclosed or described by a rim (1 a) of the wheel (1), and wherein the wheel (1) can be driven by means of a drive shaft (2) and a gearing (3-4-5-6-7), which adjoins said wheel and is arranged at least partly within the space (9) enclosed or described by the rim (1 a) of the wheel (1), said gearing having at least two transmission stages (3-4), (6-7) arranged offset from one another in the axial direction of the wheel (1) and formed by gear wheels (3, 4, 6, 7), **characterised in that** the rotational axis of a connection shaft (5) connecting the second gear wheel (4) of the first transmission stage (3-4) to the first gearing wheel (6) of the second transmission stage (6-7) coincides with the rotational axis (13*) represented by the connection member (13) of the two control arms.

2. An individual wheel suspension according to claim 1, **characterised in that** the second control arm (10), at least in the construction position and at least in a projection in the direction of the rotational axis of the wheel, and/or the gearing (3-4-5-6-7) with its two transmission stages (3-4), (6-7) is also located within the space (9) enclosed or described by a rim (1 a) of the wheel (1).

3. An individual wheel suspension according to claim 1 or 2, **characterised in that** the rotational axis (13*) of the articulated connection between the first control arm (11) and the second control arm (10) is slightly inclined relative to the horizontal and/or relative to the transverse direction of the vehicle in the construction position.

4. An individual wheel suspension according to claim 3, **characterised in that** at least the first gear wheel (6) of the second transmission stage (6-7), optionally also the second gear wheel (4) of the first transmission stage (3-4), is configured as a bevel gear, more especially as a bevel gear wheel.

5. An individual wheel suspension according to claim 4, **characterised in that** the second gear wheel (7) of the second transmission stage (6-7) is configured as a ring gear with internal teeth.

6. An individual wheel suspension according to any one of the preceding claims, **characterised in that** the rotational axis of the drive shaft (2) coincides with the rotational axis of the second control arm (10), in which the latter is supported with only one kinematic degree of rotational freedom in an articulated manner on the vehicle body (15).

7. An individual wheel suspension according to any one of the preceding claims, **characterised in that** when the rotational axis of one of the two control arms (11, 10) coincides with a rotational axis of a transmission stage (3-4), 6-7) of the gearing (3-4-5-6-7), the corresponding control arm (11, 10) is rotatably mounted on a shaft (2, 5, 8) having this rotational axis.

8. An individual wheel suspension according to any one of the preceding claims, **characterised in that** at least one of the control arms (11, 10) is configured, at least in portions, in the manner of a housing (11*, 10*), within which the two gear wheels (3, 4, 6, 7) of a transmission stage (3-4), (6-7) are arranged.

9. An individual wheel suspension according to any one of the preceding claims, **characterised in that** a rotation damper element (135) and/or rotation spring element influencing the movements of the wheel (1) relative to the vehicle body (15) is provided in the articulated connection between the first control arm (11) and the second control, arm (10).

10. An individual wheel suspension according to any one of the preceding claims, **characterised in that** a rotation damper element and/or rotation spring element (115) influencing the movements of the wheel (1) relative to the vehicle body (15) is provided in the articulated attachment of the second control arm (10) on the vehicle body (15).

## Revendications

1. Suspension indépendante d'une roue motrice non directrice (1) d'un véhicule à deux pistes comportant deux bras de suspension (11, 10) s'étendant du point de vue cinématique en projection verticale essentiellement dans la direction longitudinale du véhicule et respectivement susceptibles de pivoter dans un plan essentiellement vertical, du fait de leur montage, suspension, dans laquelle, sur le premier bras de suspension (11) est fixé directement ou indirectement un palier de roue (O) portant la roue, et ce premier bras de suspension (11) s'appuie, par son tronçon d'extrémité, sur le châssis (15) du véhicule par l'intermédiaire d'un appui pendulaire (12) s'étendant dans la position de construction au moins essentiellement en direction verticale, ou un bras triangulaire ayant une base élargie,
le second bras de suspension (10) d'une part s'appuie et est articulé avec un seul degré de liberté de rotation cinématique directement ou indirectement sur la carrosserie (15) du véhicule, et est d'autre part articulé avec un seul degré de liberté de rotation cinématique sur le premier bras de suspension (11) entre le palier de roue (O) et le point de fixation (D) de l'appui pendulaire (12) par l'intermédiaire d'un élément de liaison (13) définissant un axe de rotation (13*),
le premier bras de suspension (11) est situé, au moins par son tronçon s'étendant du palier de roue (O) à l'élément de liaison (13) avec le second bras de suspension (10) à l'intérieur du volume (9) inclus dans ou décrit par la jante (1a) de la roue (1), et
la roue (1) peut être entrainée par l'intermédiaire d'un arbre d'entrainement (2) et d'une transmission (3-4-5-6-7) connectée à celui-ci et positionnée au moins partiellement dans le volume (9) inclus dans ou décrit par la jante (1a) de la roue (1) et qui comporte au moins deux étages de démultiplication (3-4), (6-7) décalés l'un par rapport à l'autre dans la direction axiale de la roue (1), et formés par des roues d'engrenages (3, 4, 6, 7),
**caractérisée en ce que**
l'axe de rotation d'un arbre de liaison (5) reliant la seconde roue d'engrenage (4) du premier étage de démultiplication (3-4) avec la première roue d'engrenage (6) du second étage de démultiplication (6-7) coïncide avec l'axe de rotation (13*) défini par l'élément de liaison (13) des deux bras de suspension.

2. Suspension de roue indépendante conforme à la revendication 1,
**caractérisée en ce que**
le second bras de suspension (10), au moins dans sa position de construction et au moins en projection en direction de l'axe de rotation de la roue, et/ou la transmission (3-4-5-6, 7) avec ses deux étages de démultiplication (3-4), (6-7) sont également positionnés à l'intérieur du volume (9) décrit par ou inclus dans la jante (1a) de la roue (1).

3. Suspension de roue indépendante conforme à la revendication 1 ou 2,
**caractérisée en ce que**
l'axe de rotation (13*) de la liaison articulée entre le premier bras de suspension (11) et le second bras de suspension (10) est légèrement incliné dans la position de construction par rapport à l'horizontale et/ou à la direction transversale du véhicule.

4. Suspension de roue indépendante conforme à la revendication 3,
**caractérisée en ce qu'**
au moins la première roue d'engrenage (6) du second étage de démultiplication (6-7) et le cas échéant également la seconde roue d'engrenage (4) du premier étage de multiplication (3-4) est réalisée sous la forme d'une roue conique, en particulier d'un roue dentée conique.

5. Suspension de roue indépendante conforme à la revendication 4,
**caractérisée en ce que**
la seconde roue d'engrenage (7) du second étage de démultiplication (6, 7) est réalisée sous la forme d'une couronne circulaire ayant une denture interne.

6. Suspension de roue indépendante conforme à l'une des revendications précédentes,
**caractérisée en ce que**
l'axe de rotation de la roue d'entrainement (2) coïncide avec l'axe de rotation du second bras de suspension (10) par lequel celui-ci est articulé sur la carrosserie (15) du véhicule avec un seul degré de rotation cinématique.

7. Suspension de roue indépendante conforme à l'une des revendications précédentes,
**caractérisée en ce que**
lors d'une coïncidence de l'axe de rotation de l'un des deux bras de suspension (10, 11) avec l'axe de rotation d'un étage de démultiplication (3-4), (6-7) de la transmission (3-4-5-6-7), le bras de suspension (10, 11) correspondant est logé mobile en rotation sur un arbre (2, 5, 8) présentant cet axe de rotation.

8. Suspension de roue indépendante conforme à l'une des revendications précédentes,
**caractérisée en ce qu'**
au moins l'un des bras de suspension (10, 11) est réalisé au moins par tronçons à la manière d'un carter (11*, 10*) à l'intérieur duquel sont montées les deux roues de transmission (3-4), (6-7) d'un étage de démultiplication (3, 4, 6, 7).

9. Suspension de roue indépendante conforme à l'une des revendications précédentes,
**caractérisée en ce que**
dans la liaison articulée entre le premier bras de suspension (11) et le second bras de suspension (10) il est prévu un élément d'amortissement de rotation (135) et/ou un élément à ressort de rotation ayant une influence sur les mouvements de la roue (1) par rapport à la carrosserie (15) du véhicule.

10. Suspension de roue indépendante conforme à l'une des revendications précédentes,
**caractérisée en ce que**
dans la liaison articulée du second bras de suspension (10) sur la carrosserie (15) du véhicule il est prévu un élément d'amortissement de rotation et/ou un élément à ressort de rotation (115) ayant une influence sur les mouvement de la roue (1) par rapport à la carrosserie (15) du véhicule.
